# EUROPÄISCHE PATENTSCHRIFT

(11) **EP 3 561 401 B1**
(45) Veröffentlichungstag und Bekanntmachung des Hinweises auf die Patenterteilung: **25.06.2025**
(21) Anmeldenummer: 19169377.9
(22) Anmeldetag: 16.04.2019
(51) Int. Cl.: F24F 3/14, B01D 53/26

(54) **LUFTENTFEUCHTER**
AIR DEHUMIDIFIER
DÉSHUMIDIFICATEUR D'AIR

(30) Priorität: 19.04.2018 DE 102018205992
(43) Veröffentlichungstag der Anmeldung: 30.10.2019
(73) Patentinhaber: Henkel AG & Co. KGaA, 40589 Düsseldorf (DE)
(72) Erfinder: Rushe, Peter, 40589 Düsseldorf (DE); Ruthe-Steinsiek, Kai, 40223 Düsseldorf (DE)

(56) Entgegenhaltungen:
- WO-A1-2005/089904
- WO-A1-2012/066150
- DE-U1- 202017 100 501
- GB-A- 2 536 404
- JP-A- 2003 144 834
- US-A- 2 026 935

## Beschreibung

Die Erfindung betrifft eine Baugruppe bestehend aus einer Vorrichtung zur Absorption von Feuchtigkeit aus Raumluft sowie aus einem hygroskopisches Luftentfeuchtungsmittel.

Dergleiche Vorrichtungen sind im Stand der Technik weit verbreitet. Mit Vorrichtungen der bekannten Art wird die Feuchtigkeit aus der Raumluft aufgenommen und in Form von Wasser oder einer wässrigen Lösung in einem Auffangbehälter gesammelt. Hierzu kommt ein hygroskopisches Luftentfeuchtungsmittel zum Einsatz, welches beispielsweise in Pulver-oder Granulatform vorliegt. Als Luftentfeuchtungsmittel haben sich hier insbesondere Calciumchlorid oder Magnesiumchlorid als einsetzbar herausgestellt. Beispiele für derartige Vorrichtungen werden insbesondere in der DE8816583U1, der EP793060A1 oder der US 5,125,561 offenbart.

Einfacher handhabbar und insbesondere bei dem Befüllen oder Nachfüllen besagter Vorrichtung mit einem Luftentfeuchtungsmittel hat sich jedoch der Einsatz eines Luftentfeuchtungsmittels in Tablettenform erwiesen. Derartige Tabletten sind meist im Wesentlichen zylindrisch gestaltet und werden insbesondere aus in Pulver- oder Granulatform vorliegenden hygroskopischen Mitteln, wie beispielsweise Calciumchlorid oder Magnesiumchlorid oder einer Mischung, durch ein Pressverfahren hergestellt. Beispiele für Vorrichtungen zur Aufnahme solcher Tabletten zeigen die EP1779043B1, die EP2594857A1 oder die GB2536404A. Ein Großteil der Oberfläche der Tablette steht dabei für die Absorption der Feuchtigkeit zur Verfügung. Oft werden die Tabletten auf eine Unterlage aufgelegt, wie etwa bei der GB2536404A. Hier kann sich jedoch ein Feuchtigkeitsfilm auf der Oberseite der Tablette bilden, so dass die für die Absorption zur Verfügung stehende Oberfläche reduziert wird. In der EP1779043B1 oder der EP2594857A1 kommen verschiedene Haltegestelle für eine Tablette zum Einsatz. Nachteil bei derartigen Lösungen können die aufgrund der hochkant stehenden Tabletten relativ großen Abmessungen der Vorrichtungen sein. Eine weitere Vorrichtung zur Entfeuchtung von Luft unter Verwendung von Calciumchlorid ist aus der US2026935A bekannt.

Aufgabe der vorliegenden Erfindung ist daher die Bereitstellung einer verbesserten Vorrichtung der eingangs genannten Art.

Diese Aufgabe wird durch die Merkmale des Anspruchs 1 gelöst.

Vorteilhafte Weiterbildungen der Erfindung sind mit den Unteransprüchen angegeben.

Grundgedanke der vorliegenden Erfindung ist der Einsatz einer Baugruppe bestehend aus einer Vorrichtung zur Absorption von Feuchtigkeit aus Raumluft, sowie aus einer Tablette beinhaltend ein hygroskopisches Luftentfeuchtungsmittel aufweisend eine Oberseite und eine Unterseite, wobei die Vorrichtung einen Auffangbehälter zum Auffangen einer durch die Absorption entstehenden Lösung aufweist, wobei der Auffangbehälter einen Boden zum Aufstellen der Vorrichtung auf ein Substrat umfasst; eine oberhalb des Auffangbehälters angeordnete Abdeckung, die einen Innenraum umgibt; sowie eine in dem Innenraum angeordnete Haltevorrichtung für die Anordnung der Tablette vorzugsweise über deren Unterseite, wobei die Gestaltung der Haltevorrichtung und die Form der Tablette derart aufeinander abgestimmt sind, dass die Oberseite der vorzugsweise mit der Unterseite auf der Haltevorrichtung angeordneten Tablette im bestimmungsgemäßen Gebrauch in einer Ebene liegt, die schräg zum Substrat verläuft.

Denkbar sind hier dabei beispielsweise Gestaltungen der Vorrichtung, bei denen der Auffangbehälter einen Boden mit einer Standebene aufweist, auf dem die Vorrichtung auf dem Substrat angeordnet wird. Auch können Standmittel, wie beispielsweise Füße, zum Einsatz kommen, die in einer Standebene liegen, die im Gebrauch der Ebene des Substrats entspricht. Mithin liegt besagte Oberseite der Tablette im bestimmungsgemäßen Gebrauch in einer Ebene, die schräg zur Standebene der Vorrichtung und daher nach dem Platzieren auf einem Substrat über besagte Standebene auch schräg zum Substrat verläuft. Mit einer solchen Baugruppe kann eine besonders effektive Absorption ermöglicht werden. Durch besagten schrägen Verlauf der Oberseite hinsichtlich des Substrates weist die Tablette im bestimmungsgemäßen Gebrauch eine Steigung auf, welche beispielsweise ein Ablaufen der durch die Absorption der Feuchtigkeit entstehenden Lösung auf der Oberseite und möglicherweise auch auf der Unterseite der Tablette fördern kann. Auf diese Weise kann beispielsweise eine Bedeckung der Oberfläche durch einen Feuchtigkeitsfilm vermieden werden, was zu einer Effektivitätssteigerung führen kann. Denkbar sind auch Ausführungsformen, bei denen die notwendige Zeit für die Bildung der ersten Menge an Lösung im Auffangbehälter verringern werden kann, was für den Anwender ein wichtiger Indikator für die Funktionsfähigkeit der Vorrichtung sein kann. Im Gegensatz zu bekannten Luftentfeuchtern mit aufrechtstehenden Tabletten können durch die erfindungsgemäße Baugruppe die äußeren Abmessungen deutlich verringert werden.

Erfindungsgemäß ist in dem Innenraum eine Haltevorrichtung angeordnet, die für die Anordnung der Tablette vorzugsweise über deren Unterseite vorgesehen ist. Selbstverständlich kann die Haltevorrichtung auch eine Anordnung der Tablette über andere Bereiche der Tablette ermöglichen. Diese Haltevorrichtung stellt Haltemittel für die Tablette bereit, die vorzugsweise zumindest bereichsweise mit der Unterseite oder mit Abschnitten, die die Unterseite der Tablette begrenzen, in Kontakt steht. Die Haltevorrichtung und auch die Tablette können unterschiedlich gestaltet sein, wobei aber die Gestaltung der Haltevorrichtung und die Form der Tablette derart aufeinander abgestimmt sind, dass die Oberseite der mit vorzugsweise der Unterseite auf der Haltevorrichtung angeordneten Tablette im bestimmungsgemäßen Gebrauch in einer Ebene liegt, die schräg zum Substrat verläuft.

Erfindungsgemäß ist der Einsatz einer Haltevorrichtung für die Tablette vorgesehen, die derart gestaltet ist, dass die Unterseite der Tablette in einer Ebene liegt, die schräg zum Substrat verläuft. Eine solche Gestaltungsform eignet sich insbesondere für Tabletten mit einer Oberseite, die parallel zur Unterseite verläuft. Dies ist beispielsweise bei einer Vielzahl der im Markt erhältlichen im Wesentlichen zylindrisch gestalteten Tabletten der Fall. Denkbar ist auch der Einsatz von Tabletten, bei denen die Oberseite und die Unterseite zwar nicht parallel zueinander verlaufen, wobei jedoch die Summe des Winkels zwischen der Ebene, in der die Unterseite der Tablette liegt, und des Substrates sowie des Winkels zwischen der Ebene, in der die Oberseite der Tablette liegt, und der Unterseite sich nicht aufheben, so dass die Oberseite der Tablette parallel zum Substrat angeordnet wäre.

Vorzugsweise ist der Auffangbehälter im Wesentlichen als geschlossene Sammelschale gestaltet, um ein Auslaufen der von der sich durch die aufgenommene Feuchtigkeit auflösende Tablette entstehenden Lösung zu verhindern und weist an seiner Oberseite eine angeformte oder als separates Teil gestaltete Deckfläche auf. Dabei ist die Verbindung zwischen Sammelschale und Deckfläche vorzugsweise dicht gestaltet. Zudem weist die Deckfläche vorzugsweise eine Auslaufsperre auf, die es ermöglicht, dass eine Lösung, die von der Deckfläche gesammelt wurde, in die Sammelschale ablaufen kann, und die das Auslaufen der gesammelten Lösung aus einer umgekippten Vorrichtung verhindert. Die Gestaltung insbesondere der Auslaufsperre kann dabei gemäß der Offenbarung der EP1779043B1 erfolgen, die insoweit die vorliegende Offenbarung ergänzt.

Die zum Einsatz kommende Tablette besteht dabei insbesondere aus hygroskopischen Mitteln in Pulver- oder Granulatform, wie beispielsweise Calciumchlorid oder Magnesiumchlorid oder einer Mischung, durch ein Pressverfahren in besagte Tablettenform gebracht werden. Selbstverständlich können auch weitere Zusatz- und Hilfsstoffe, wie beispielsweise Duftstoffe oder Farbstoffe Teil einer zum Einsatz kommenden Mischung sein. Insbesondere sind die Merkmale einer Tablette sowie ein Herstellungsverfahren einer Tablette denkbar wie in der EP1426105A1 beschrieben, welche insoweit die vorliegende Offenbarung ergänzt. Die Grundform der Tablette ist vorzugsweise zylindrisch. Denkbar sind jedoch auch eckige Grundformen, insbesondere Tabletten mit dreieckigem, viereckigem oder vieleckigem Querschnitt.

In einer vorteilhaften Ausgestaltung der Erfindung ist vorgesehen, dass die Oberseite in einer Ebene liegt, die in einem Winkel im Bereich von 2° bis 20°, vorzugsweise ca. 10° zum Substrat verläuft. Auf diese Weise kann ein effektives Abfließen von durch die Absorption gebildete Lösung ermöglicht werden. Gleichwohl kann eine Baugruppe bereitgestellt werden, deren äußere Abmessung begrenzt ist.

Ein weiterer Vorteil ist der Einsatz einer Baugruppe, bei der die Tablette mit zumindest Bereichen ihrer Unterseite auf der Haltevorrichtung aufliegt, wobei die Haltevorrichtung Positionierungsmittel für die Tablette aufweist, die derart gestaltet sind, dass die Unterseite der auf der Haltevorrichtung angeordneten Tablette in einer Ebene liegt, welche schräg zum Substrat verläuft. Besagte Positionierungsmittel kommen mit der Oberfläche der Tablette in Kontakt und ermöglichen erst eine Anordnung der Tablette derart, dass die Unterseite der Tablette in einer Ebene liegt, die schräg zum Substrat verläuft. Eine solche Gestaltungsform eignet sich insbesondere für Tabletten mit einer Oberseite, die parallel zur Unterseite verläuft. Dies ist beispielsweise bei einer Vielzahl der im Markt erhältlichen im Wesentlichen zylindrisch gestalteten Tabletten der Fall. Die Positionierungsmittel können mit der Tablette sowohl im Bereich der Unterseite mit selbiger in Kontakt kommen als auch mit anderen Teilen der Tablette, beispielsweise an vorstehenden Teilen durch den Einsatz von beispielsweise Nuten oder aber an Öffnungen oder Durchgangsbohrungen mittels des Einsatzes von beispielsweise eines Dornes. Dem Anwender durch den Einsatz von Positionierungsmitteln eine Hilfe bei der Bedienung der Baugruppe, also beispielsweise bei dem Nachfüllen einer Vorrichtung mit einer neuen Tablette gegeben werden. Insbesondere können die Positionierungsmittel als stift- oder flächenartige Führungen für die Tablette ausgestaltet sein. Die Positionierungsmittel kommen mit der Oberfläche der Tablette in Kontakt und führen zu einer Anordnung der Tablette derart, dass die Unterseite der Tablette in einer Ebene liegt, die schräg zum Substrat verläuft. Besonders bevorzugt ist die Gestaltung der Baugruppe derart, dass die Unterseite der auf der Haltevorrichtung angeordneten Tablette in einer Ebene liegt, die in einem Winkel im Bereich 2° bis 20°, vorzugsweise ca. 10° zum Substrat verläuft.

Erfindungsgemäß weist die Haltevorrichtung Auflagemittel für Anordnung der Unterseite der Tablette auf, wobei die Auflagemittel in einer Ebene liegen, die schräg zum Substrat verläuft. Auf diese Weise kann dem Anwender auch eine Hilfe bei der Bedienung der Baugruppe, beispielsweise bei dem Nachfüllen einer Vorrichtung mit einer neuen Tablette gegeben werden. Die Auflagemöglichkeit für die Unterseite der Tablette selbst liegt derart in einer Ebene, dass die Unterseite der Tablette durch einfaches Auflegen auf diese Auflage, die in einer Ebene liegt, die schräg zum Substrat verläuft, automatisch auch in besagter Ebene liegt und somit ebenfalls schräg zum Substrat verläuft. Besonders bevorzugt ist die Gestaltung der Baugruppe derart, dass die Auflagemittel der Haltevorrichtung in einer Ebene liegen, die in einem Winkel im Bereich von 2° bis 20°, vorzugsweise 5° bis 15°, besonders bevorzugt 10° zum Substrat verläuft.

Erfindungsgemäß ist vorgesehen, eine Mehrzahl an Auflagerippen, Auflagestege oder Auflagedornen zur Anordnung der Unterseite der Tablette als Auflagemittel vorzusehen. Auflagerippen, Auflagestege oder Auflagedornen können eine Auflagemöglichkeit für die Tablette ermöglichen, wobei die bedeckte Oberfläche durch die Auflagemittel im Vergleich zu einer Auflagefläche gering ist, um möglichst viel freie Oberfläche für die Absorption von Feuchtigkeit bereitzustellen.

Erfindungsgemäß kommt eine Mehrzahl an Auflagerippen, Auflagestege oder Auflagedornen zum Einsatz, die sich in unterschiedliche Höhe in den Innenraum erstrecken. Natürlich ist es bei einer Mehrzahl von Auflagerippen, Auflagestege oder Auflagedornen auch denkbar, dass sich einige der besagten in gleiche Höhe in den Innenraum erstrecken, sofern nur einige oder zumindest eine der Auflagerippen, Auflagestege oder Auflagedornen eine unterschiedliche Höhe aufweist, um eine schräge Auflagemöglichkeit für die Unterseite der Tablette bereitzustellen. Besonders bevorzugt sind die Auflagerippen, Auflagestege oder Auflagedornen derart angeordnet und weisen derartig unterschiedliche Höhen auf, dass deren distale Endpunkte in einer Ebene liegen, die in einem Winkel im Bereich von 2° bis 20°, vorzugsweise 5° bis 15°, besonders bevorzugt 10° zum Substrat verläuft.

Zusätzlich kann es bei dem Einsatz besagter Auflagemittel von Vorteil sein, das Auflagemittel zusätzlich zu den Auflagerippen, Auflagestegen oder Auflagedornen durch eine Auflagefläche zur Anordnung der Unterseite der Tablette zu gestalten. Eine flächige Auflage kann eine besonders sichere Auflage der Tablette ermöglichen. Besonders bevorzugt ist die Gestaltung der Baugruppe derart, dass die Auflagefläche der Haltevorrichtung in einer Ebene liegen, die in einem Winkel im Bereich von 2° bis 20°, vorzugsweise 5° bis 15°, besonders bevorzugt 10° zum Substrat verläuft.

Ein weiterer Vorteil ist der Einsatz eine Baugruppe, wobei die Haltevorrichtung einen Dorn umfasst und wobei die Tablette eine korrespondierende Öffnung zur Aufnahme des Dorns aufweist, wobei der Dorn Positionierungsmittel für die Tablette aufweist, die derart gestaltet sind, dass die Unterseite der auf der Haltevorrichtung angeordneten Tablette in einer Ebene liegt, welche schräg zum Substrat verläuft. Durch den Einsatz eines Dornes kann dem Anwender eine besonders einfache Bedienung der Vorrichtung ermöglicht werden. Der Anwender braucht beispielsweise beim Befüllen der Vorrichtung mit einer neuen Tablette letztgenannte mit der Öffnung lediglich auf dem Dorn platzieren, um eine erfindungsgemäße Baugruppe mit den besagten Vorteilen zu erhalten. Der Dorn kann dabei beispielsweise in Form eines Zylinders, eines Kegels oder Kegelstumpfes oder einer ähnlichen geometrischen Form gestaltet sein und flächig mit der Oberfläche der Tablette in Kontakt kommen. Vorzugsweise jedoch weist der Dorn vorstehende Elemente wie Rippen oder Stege auf oder wird durch selbige erst gebildet, um die bedeckte Oberfläche durch Dorn gering zu halten, um möglichst viel freie Oberfläche für die Absorption von Feuchtigkeit bereitzustellen.

In einer vorteilhaften Weiterentwicklung kann der Dorn zumindest eine Öffnung aufweisen, um eine Belüftung der Tablette im Bereich ihrer Öffnung zu ermöglich und um die freie und zur Absorption von Feuchtigkeit zur Verfügung stehende Oberfläche der Tablette weiter zu vergrößern. Auch kann die zumindest eine Öffnung derart gestaltet sein, dass sie der durch die Absorption entstehenden Lösung eine bevorzugte Abtropf- und/oder Fließrichtung ermöglicht.

Weiterhin hat es sich als vorteilhaft herausgestellt, wenn der Dorn vorstehende Abstandselemente, insbesondere längliche Rippen, die sich in Erstreckungsrichtung des Dornes erstrecken können, zur Bereitstellung einer Auflagemöglichkeit für die Tablette im Bereich ihrer Öffnung aufweist, um die Kontaktfläche von Tablette und Dorn zu minimieren. In diesem Fall hängt die Tablette demnach lediglich durch eine Auflage von kleinen Oberflächenbereichen innerhalb der Öffnung auf genannten Abstandselementen an dem Dorn, so dass die freie Absorptionsoberfläche geringstmöglich verkleinert wird. Denkbar ist insbesondere auch der Einsatz von Noppen, Vorsprüngen oder Stiften als Abstandselemente.

Ein weiterer Vorteil ist der Einsatz eine Baugruppe, wobei die Oberseite der Tablette in einer Ebene liegt, die parallel zu einer Ebene verläuft, in der die Unterseite liegt. Eine derartige Kombination eignet sich bei dem Einsatz von Haltevorrichtungen, die eine schräge Anordnung der Unterseite der Tablette ermöglichen, um zu ermöglichen, dass die Oberseite im bestimmungsgemäßen Gebrauch in einer Ebene liegt, die schräg zum Substrat verläuft. Derartige Tabletten können dabei im Wesentlichen zylindrisch gestaltet sein, wie es beispielsweise bei einer Vielzahl der im Markt erhältlichen Tabletten der Fall ist, die besonders einfach herstellbar sind.

Alternativ kann es sich der Einsatz einer Baugruppe als vorteilhaft erweisen, wobei die Oberseite der Tablette in einer Ebene liegt, die schräg zu einer Ebene verläuft, in der die Unterseite liegt. Eine solche Vorrichtung eignet sich insbesondere für Tabletten, bei denen die Oberseite und die Unterseite nicht parallel zueinander verlaufen, so dass besagte Schräge der Oberseite hinsichtlich des Substrats durch die Form der Tablette ermöglicht wird, um zu ermöglichen, dass die Oberseite im bestimmungsgemäßen Gebrauch in einer Ebene liegt, die schräg zum Substrat verläuft. Eine derartige Kombination kann aber auch zweckmäßig in Verbindung mit Haltevorrichtungen sein, welche eine schräge Anordnung der Unterseite der Tablette ermöglichen, wobei jedoch die Summe des Winkels zwischen der Ebene, in der die Unterseite der Tablette liegt, und des Substrats sowie des Winkels zwischen der Ebene, in der die Oberseite der Tablette liegt, und der Unterseite sich nicht aufheben, so dass die Oberseite der Tablette parallel zum Substrat angeordnet wäre.

Bevorzugte Ausführungsformen von erfindungsgemäßen Vorrichtungen, Tabletten und Systemen werden in den beiliegenden Figuren gezeigt.

Darin zeigt
Figur 1 eine geschnittene Seitenansicht einer erfindungsgemäßen Baugruppe
Figur 2 eine geschnittene Seitenansicht einer nicht erfindungsgemäßen Baugruppe
Figur 3 eine geschnittene Seitenansicht einer weiteren Variante einer erfindungsgemäßen Baugruppe
Figur 4 eine perspektivische Ansicht der Baugruppe aus Figur 3,
Figur 5 eine perspektivische Ansicht eines Teils der Baugruppe aus Figur 3,
Figur 6 eine geschnittene Seitenansicht der Baugruppe aus Figur 3,

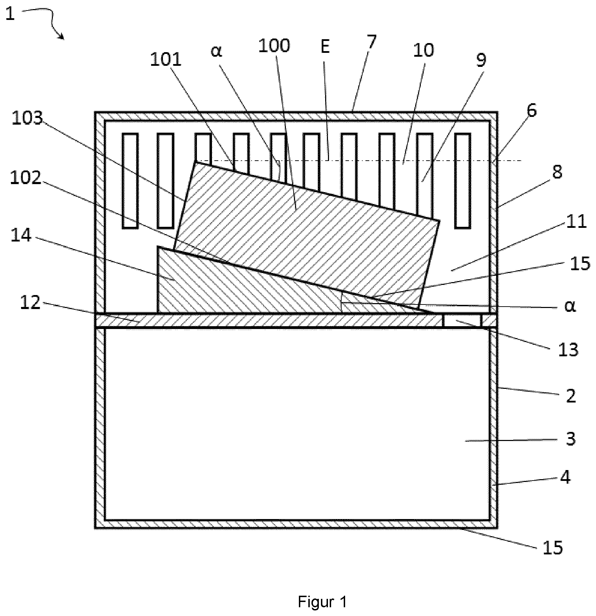

Figur 1 zeigt eine geschnittene Seitenansicht einer erfindungsgemäßen Baugruppe bestehend aus einem Luftentfeuchter 1, einer Vorrichtung zur Absorption Feuchtigkeit aus Raumluft, sowie einer Tablette 100. Der Luftentfeuchter 1 setzt sich aus mehreren aus einem Kunststoffmaterial gefertigten Bauelementen zusammen. Das Oberteil des Luftentfeuchters 1 wird durch eine Abdeckung 6 gebildet. Die Abdeckung 6 umfasst eine obere Deckseite 7 sowie eine Seitenwand 8. Die Abdeckung 6 ist im gezeigten Ausführungsbeispiel einteilig gestaltet, kann aber auch aus mehreren Teilen bestehen und insbesondere bewegliche Klapp-oder Deckelelemente aufweisen. Die Abdeckung 6 umschließt einen Innenraum 11, in dem eine Haltevorrichtung 14 für die Tablette 100 vorgesehen ist. Die Tablette 100 weist im gezeigten Ausführungsbeispiel einen im Wesentlichen zylindrischen Tablettenkörper auf, genauer gesagt die Form eines im Wesentlichen geraden Kreiszylinders, und besteht im Wesentlichen aus einem hygroskopisches Luftentfeuchtungsmittel, welches durch ein Pressverfahren in besagte Form gebracht worden ist. Die Tablette 100 weist eine Oberseite 101, eine der Oberseite gegenüberliegende und parallel zu dieser angeordnete Unterseite 102 sowie einen Mantel 103 auf. Die äußere Oberfläche bildet dabei die Absorptionsfläche, die der Absorption der Feuchtigkeit aus der Raumluft dient. Um eine Absorption der Feuchtigkeit zu ermöglichen, weist die Abdeckung 6 in ihrer Seitenwand 8 eine Vielzahl von Belüftungsschlitzen 9 auf, die durch Rippen 10 voneinander getrennt sind. Selbige sind auch auf der nicht abgebildeten gegenüberliegenden Seite der Seitenwand 8 vorgesehen, wobei die Belüftungsschlitze 9 dort eine Projektion der hier dargestellten Belüftungsschlitze 9 sind, um eine besonders gute Belüftung im Sinne einer Durchzugsmöglichkeit durch den Innenraum 11 bereitzustellen. Das Unterteil des Luftentfeuchters 1 bildet ein Auffangbehälter 2, der einen Auffangraum 3 für eine Salzlösung umschließt, welche durch die Absorption von Feuchtigkeit aus Raumluft über die Tablette 100 entsteht. Der Auffangbehälter 2 umfasst eine Seitenwand 4 sowie einen Boden 5 mit dem der Luftentfeuchter 1 auf einem Substrat platziert wird. Hierfür kann der Boden 5 einen umlaufenden und nach unten vorstehenden Rand aufweisen oder auch vorstehende Füße, um einen besonders sicheren Stand auf dem Substrat zu ermöglichen. Im gezeigten Ausführungsbeispiel ist der Boden 5 eben gestaltet und, liegt flächig auf dem Substrat auf. Die Substratebene - ein ebenes Substrat vorausgesetzt - liegt mithin in der Ebene, in der sich der Boden 5 des Luftentfeuchters befindet. Ferner ist zwischen Abdeckung 6 und Auffangbehälter 2 ein Mittelteil 12 vorgesehen, welches einen nicht gezeigten Auslaufschutz umfassen kann, der einerseits ein Abfließen der Salzlösung von der im Innenraum 11 vorgesehenen Tablette 100 in den Auffangraum 3 ermöglicht. Auf der anderen Seite jedoch ein aus beispielsweise dem Umkippen des Luftentfeuchters 1 resultierendes Auslaufen der Salzlösung aus diesem Auffangraum 3 verhindert. Im gezeigten Ausführungsbeispiel weist das Mittelteil 12 lediglich einen Kanal 13 auf, der eine Kommunikation von Innenraum 11 und Auffangraum 3 ermöglicht und ein Abfließen besagter Salzlösung in den Auffangraum 3 sicherstellt. Zudem weist das Mittelteil 12 eine Haltevorrichtung 14 für die Tablette 100 auf. Die Haltevorrichtung 14 ist dabei im Innenraum 11 angeordnet. Die Haltevorrichtung 14 weist eine obere Auflagefläche 15 auf der die Tablette 100 mit ihrer Unterseite 102 platziert ist. Unter einer Auflagefläche 15 ist nicht zwangsläufig ein (groß)flächiger Bereich zur Platzierung der Tablette 100 zu verstehen. Die Auflagefläche 15 kann auch durch einzelne Abschnitte oder linienartige- oder punktförmige Auflagebereiche bereitgestellt werden und so eine Auflagemöglichkeit für die Unterseite 102 der Tablette 100 bereitstellen. Im gezeigten Ausführungsbeispiel ist die Haltevorrichtung 14 derart keilartig gestaltet, dass die Auflagefläche 15 in einem Winkel α 10° schräg zur Ebene verläuft, in der der Boden 5 liegt und somit auch schräg zum Substrat verläuft. -Die Tablette 100 ist wie oberhalb beschrieben im Wesentlichen zylindrisch gestaltet und liegt mit ihrer Unterseite 102 auf der Auflagefläche 15 auf. Die Auflagefläche 15 dient als Positionierungsmittel für die Tablette 100, dass derart gestaltet ist, dass die Unterseite 102 der auf der Haltevorrichtung 14 angeordneten Tablette 100 ebenfalls in der Ebene liegt, welche schräg zum Substrat verläuft. Da die Oberseite 101 der Tablette 100 parallel zur Unterseite 102 angeordnet ist, verläuft die Oberseite 101 zwangsläufig auf gleiche Weise schräg zum Substrat und mithin in einem Winkel α 10° schräg zum Substrat. Mithin ist die Gestaltung der Haltevorrichtung 14 durch ihre Keilform und die schräge verlaufende Auflagefläche sowie die zylindrische Form der Tablette 100 derart aufeinander abgestimmt, dass die Oberseite 101 der mit der Unterseite 102 auf der Haltevorrichtung 14 angeordneten Tablette 100 im bestimmungsgemäßen Gebrauch in einer Ebene liegt, die schräg zum Substrat verläuft. Auf diese Weise kann beispielsweise verhindert werden, dass sich ein Feuchtigkeitsfilm auf der Oberseite 101 und mitunter auch der Unterseite 102 sammelt, was mitunter zu einer Minderung der Effektivität des Luftentfeuchters bei der Absorption von Feuchtigkeit führen könnte. Durch die schräge Anordnung der Oberseite 101 der Tablette 100 kann die entstehende Salzlösung sicher abfließen und über den Kanal 13 in den Auffangraum 3 des Auffangbehälters 2 gelangen.

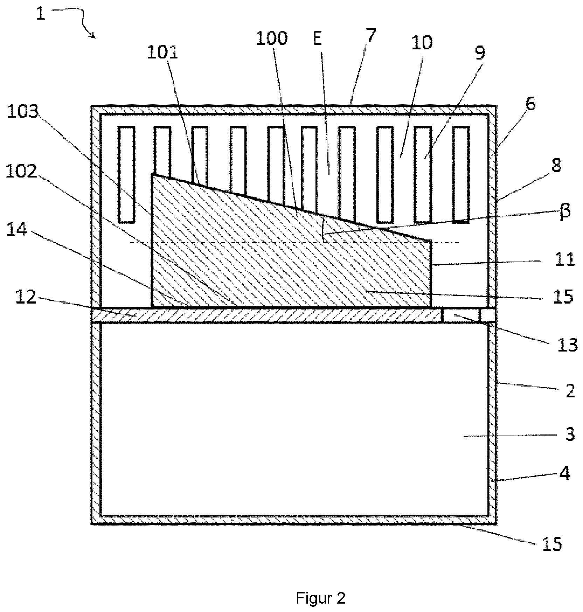

Figur 2 zeigt eine geschnittene Seitenansicht Baugruppe, die die vorliegende Erfindung nicht verwirklicht, bestehend aus dem Luftentfeuchter 1 und der Tablette 100. Der Luftentfeuchter 1 entspricht im Wesentlichen dem Luftentfeuchter 1 der Baugruppe aus Figur 1, so dass die diesbezügliche Beschreibung die folgende ergänzen soll. Das Oberteil des Luftentfeuchters 1 wird wieder durch die Abdeckung 6 gebildet, umfassend die obere Deckseite 7 sowie die Seitenwand 8. Die Abdeckung 6 umschließt den Innenraum 11, in der die Haltevorrichtung 14 für die Tablette 100 vorgesehen ist. Die Tablette 100 besteht wieder im Wesentlichen aus einem hygroskopisches Luftentfeuchtungsmittel, welches durch ein Pressverfahren in besagte Form gebracht worden ist. Die Tablette 100 unterscheidet sich jedoch von der Tablette 100 in Figur 1. In Figur 2 kommt eine Tablette 100 zum Einsatz, die die Form eines im Wesentlichen schräg abgeschnittenen geraden Kreiszylinders aufweist. Somit umfasst die Tablette 100 ebenfalls deine Oberseite 101, eine der Oberseite gegenüberliegende Unterseite 102 sowie einen Mantel 103. Jedoch sind Oberseite 101 und Unterseite 102 nicht parallel zueinander angeordnet, sondern verlaufen schräg zueinander. Auch hier bildet die Oberfläche der Tablette 100 die Absorptionsfläche, die der Absorption der Feuchtigkeit aus der Raumluft dient. Die Abdeckung 6 weist in ihrer Seitenwand 8 wieder eine Vielzahl von Belüftungsschlitzen 9 auf, die durch Rippen 10 voneinander getrennt sind. Das Unterteil des Luftentfeuchters 1 bildet auch hier der Auffangbehälter 2 umschließend den Auffangraum 3 für die Salzlösung. Der Auffangbehälter 2 umfasst die Seitenwand 4 sowie den Boden 5 mit dem der Luftentfeuchter 1 auf einem Substrat platziert wird. Dieser ist eben gestaltet und liegt flächig auf dem Substrat auf. Die Substratebene - ein ebenes Substrat vorausgesetzt - liegt mithin in der Ebene, in der sich der Boden 5 des Luftentfeuchters 1 befindet. Das Mittelteil 12 zwischen Abdeckung 6 und Auffangbehälter 2 weist den Kanal 13 auf, um ein Abfließen der Salzlösung in den Auffangraum 3 zu ermöglichen. Als Haltevorrichtung dient im gezeigten Ausführungsbeispiel ein Bereich des Mittelteils 12, der eine Auflagefläche 15 für die Unterseite 101 der Tablette 100 bereitstellt. Die Auflagefläche 15 verläuft dabei parallel zur Ebene, in der der Boden 5 liegt und somit auch parallel zum Substrat. Die Auflagefläche 15 dient als Positionierungsmittel für die Tablette 10, dass derart gestaltet ist, dass die Unterseite 102 der auf der Haltevorrichtung angeordneten Tablette 100 ebenfalls in der Ebene liegt, welche parallel zum Substrat verläuft. Da die Tablette 100 im Wesentlichen die Form eines schräg abgeschnittenen geraden Kreiszylinders aufweist, verläuft die Oberseite 101 schräg zur Unterseite 102 und somit zwangsläufig in einem Winkel β 10° schräg zum Substrat. Mithin ist die Gestaltung der Haltevorrichtung durch ihre parallel zum Substrat verlaufende Auflagefläche 15 sowie beschriebene Form der Tablette 100 derart aufeinander abgestimmt, dass die Oberseite 101 der mit der Unterseite 102 auf der Haltevorrichtung 14 angeordneten Tablette 100 im bestimmungsgemäßen Gebrauch in einer Ebene liegt, die schräg zum Substrat verläuft. Auf diese Weise kann beispielsweise die notwendige Zeit für die Bildung der ersten Menge an Lösung im Auffangbehälter 2 verringern werden, da auf der Oberseite 101 entstehende Salzlösung schnell in Richtung Auffangraum 3 abfließen kann, was für den Anwender ein wichtiger Indikator für die Funktionsfähigkeit des Luftentfeuchters 1 sein kann.

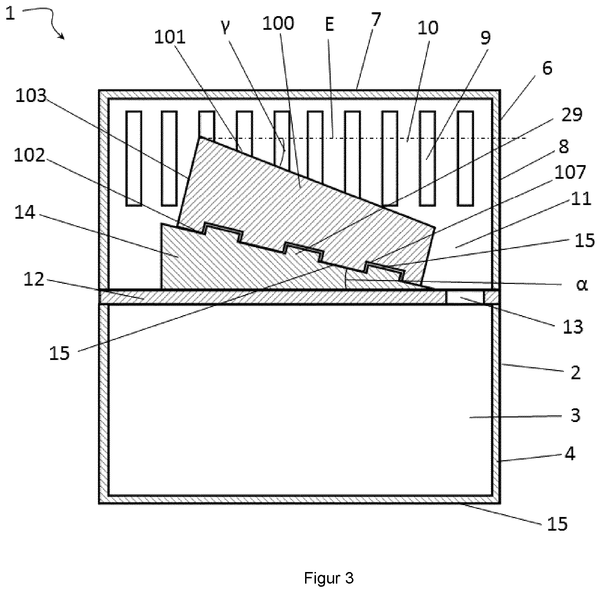

Figur 3 zeigt eine geschnittene Seitenansicht einer Variante einer erfindungsgemäßen Baugruppe bestehend aus dem Luftentfeuchter 1 und der Tablette 100. Der Luftentfeuchter 1 entspricht im Wesentlichen dem Luftentfeuchter 1 der Baugruppe aus Figur 1, so dass die diesbezügliche Beschreibung die folgende ergänzen soll. Die Tablette 100 unterscheidet sich jedoch von der Tablette 100 in Figur 1. In Figur 3 kommt eine Tablette zum Einsatz, die die Form eines im Wesentlichen schräg abgeschnittenen geraden Kreiszylinders aufweist. Somit umfasst die Tablette 100 ebenfalls eine Oberseite 101, eine der Oberseite gegenüberliegende Unterseite 102 sowie einen Mantel 103. Jedoch sind Oberseite 101 und Unterseite 102 nicht parallel zueinander angeordnet, sondern verlaufen schräg zueinander. Zudem weist die Unterseite 102 eine ringförmige Nut 107 auf, die in der Schnittansicht als zinnenartige Gestaltung der Unterseite 102 erkennbar ist, sowie eine zentrische Sacklochbohrung. Auf der Auflagefläche 15 der Haltevorrichtung 14 ist die Tablette 100 mit ihrer Unterseite 102 platziert. Die Auflagefläche 15 weist eine zu der Unterseite 102 korrespondierende Form auf und umfasst vorstehende Auflagerippen 29, die in die ringförmigen Nut 107 und die zentrische Sacklochbohrung eingreifen und als Positionierungsmittel für die Tablette 100 eine optimale Anordnung der Tablette 10 im Innenraum 11 ermöglichen. Im gezeigten Ausführungsbeispiel ist die Haltevorrichtung 14 derart keilartig gestaltet, dass die Auflagefläche 15 in einem Winkel α 10° schräg zur Ebene verläuft, in der der Boden 5 liegt und somit auch schräg zum Substrat verläuft. Mithin ist die Unterseite 102 auch schräg zum Substrat angeordnet. Die Keilform der Haltevorrichtung 14 ist dabei derart gewählt, dass der Winkel α zwischen Auflagefläche 15 und Substrat ungleich dem Winkel zwischen Oberseite 101 und Unterseite 102 der Tablette 100 in Form eines schräg abgeschnittenen geraden Kreiszylinders ist. So kann verhindert werden, dass sich bei einer ungünstigen Positionierung der Tablette die beiden Winkel einander aufheben, so dass die Oberseite 101 parallel zum Substrat angeordnet wäre. Die Auflagefläche 15 dient mithin als Positionierungsmittel für die Tablette 100, dass derart gestaltet ist, dass die Unterseite 102 der auf der Haltevorrichtung 14 angeordneten Tablette 100 ebenfalls in der Ebene liegt, welche schräg zum Substrat verläuft. Die Oberseite 101 der Tablette 100 ist nicht parallel zur Unterseite 102 angeordnet. Gleichwohl ist der Winkel zwischen Oberseite 101 und Unterseite 102 ungleich im Hinblick auf den Winkel zwischen Auflagefläche 15 und Substrat, so dass die Oberseite 101 zwangsläufig Weise in einem schräg zum Substrat verläuft, im gezeigten Ausführungsbeispiel in einem Winkel γ von ungefähr 16°. Mithin ist die Gestaltung der Haltevorrichtung 14 durch ihre Keilform und die schräg verlaufende Auflagefläche 15 sowie die beschriebene Form der Tablette 100 derart aufeinander abgestimmt, dass die Oberseite 101 der mit der Unterseite 102 auf der Haltevorrichtung 14 angeordneten Tablette 100 im bestimmungsgemäßen Gebrauch in einer Ebene liegt, die schräg zum Substrat verläuft. Auf diese Weise kann beispielsweise verhindert werden, dass sich ein Feuchtigkeitsfilm auf der Oberseite 101 sammelt, was mitunter zu einer Minderung der Effektivität des Luftentfeuchters bei der Absorption von Feuchtigkeit führen könnte. Durch die schräge Anordnung der Oberseite 101 der Tablette 100 kann die entstehende Salzlösung sicher abfließen und über den Kanal 13 in den Auffangraum 3 des Auffangbehälters 2 gelangen.

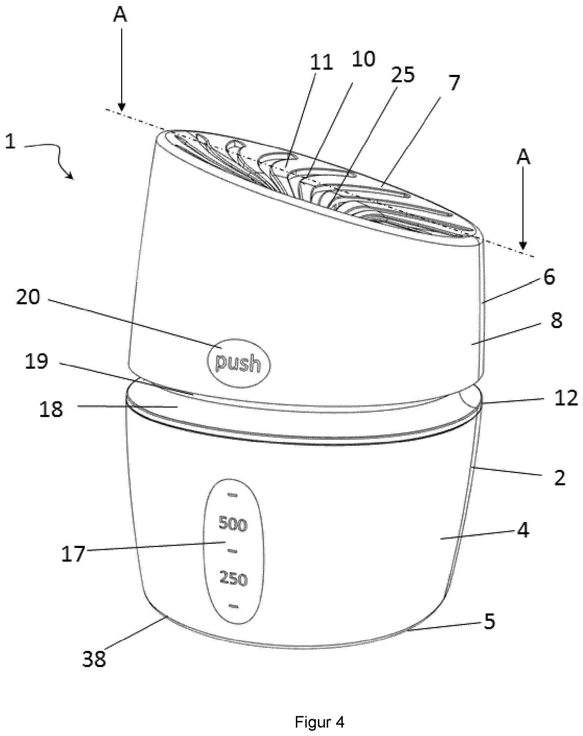

Figur 4 zeigt eine perspektivische Ansicht einer weiteren Variante einer erfindungsgemäßen Baugruppe bestehend aus dem Luftentfeuchter 1 und der Tablette . Der Luftentfeuchter 1 entspricht wieder in seinem grundsätzlichen Aufbau dem Luftentfeuchter 1 der Baugruppe aus Figur 1, so dass die diesbezügliche Beschreibung die folgende ergänzen soll. Der mit Figur 4 dargestellte Luftentfeuchter 1 umfasst ein Oberteil mit der Abdeckung 6. Die Abdeckung 6 umschließt einen Innenraum 11, in der die durch die Abdeckung 6 verdeckte Tablette 100 vorgesehen ist. Die Abdeckung 6 weist einen im Wesentlichen kreisrunden Querschnitt mit einer umlaufenden Seitenwand 8 auf. In der Seitenwand 8 ist ein Verriegelungsmittel 20 vorgesehen, um die Verbindung zwischen Abdeckung 6 und Unterteil des Luftentfeuchters 1 zu lösen. Ferner weist die Abdeckung 6 eine obere Deckseite 7 auf, die abgeschrägt gestaltet ist. Die Deckseite 7 umfasst einen Trichter 25, der in Form einer vom Wandbereich ausgehenden und in Richtung Innenraum gerichtete Wölbung ausgestaltet ist. Um eine Absorption der Feuchtigkeit durch die Tablette 100 zu ermöglichen, weist die Abdeckung 6 in ihrer Deckseite 7 eine Vielzahl von Belüftungsschlitzen 9 auf, die durch Rippen 10 voneinander getrennt sind. Die Belüftungsschlitze 9 sind dabei rotorartig angeordnet und erstrecken sich jeweils vom Randbereich ausgehend wellenartig in Richtung der Mitte der Deckseite 7 und folgen dabei der Form des Trichters 25. Das Unterteil des Luftentfeuchters 1 bildet der Auffangbehälter 3 umschließend den Auffangraum 3 für die Salzlösung, welche durch die Absorption von Feuchtigkeit aus Raumluft über die in Figur 4 verdeckte Tablette 100 entsteht. Der Auffangbehälter 3 weist einen im Wesentlichen kreisrund geformten Behälterboden 5 auf, der als Standfläche für ein Substrat eine bodenseitig umlaufende Bodenkante 38 beinhaltet sowie insbesondere zur Erhöhung der Stabilität eine von der Bodenkante 38 ausgehende und in Richtung Hohlraum gerichtete Wölbung. In Richtung Oberteil erstreckt sich eine Seitenwand 4, welche zumindest auf einer Seite mit einem zumindest teilweise transparenten oder durchscheinenden Sichtfenster mit einer Skala 17 ausgestattet ist, um dem Anwender eine Möglichkeit zu geben, den Stand oder das Niveau der Salzlösung im Auffangraum 3 einzusehen. Zwischen Abdeckung 6 und Auffangbehälter 3 ist ein Mittelteil 12 vorgesehen, Das Mittelteil 12 weist ein ringförmiges Element 19 auf, das derart gestaltet ist, dass zwischen untere Kante der Seitenwand 8 der Abdeckung 6 und Mittelteil 12 ein Versatz 18 gebildet wird, durch den eine Kommunikation zwischen Umgebung und Innenraum 11 ermöglicht werden kann. In Kombination mit besagten Belüftungsschlitzen 9 kann so eine Durchzugsmöglichkeit für die Raumluft ermöglicht werden, derart, dass die in den Innenraum 11 eintretende Raumluft an der Tablette 100 vorbeiströmt und wieder an der jeweils anderen Öffnung entweichen kann, um eine besonders effektive Absorption von Feuchtigkeit zu erreichen. Durch die Anordnung des Versatzes 18 im unterhalb der Abdeckung 6 und der Belüftungsschlitze 9 an der Deckseite 7 ist bei geeigneter Ausgestaltung auch ein Kamineffekt denkbar, der die Absorptionsrate weiter erhöhen kann.

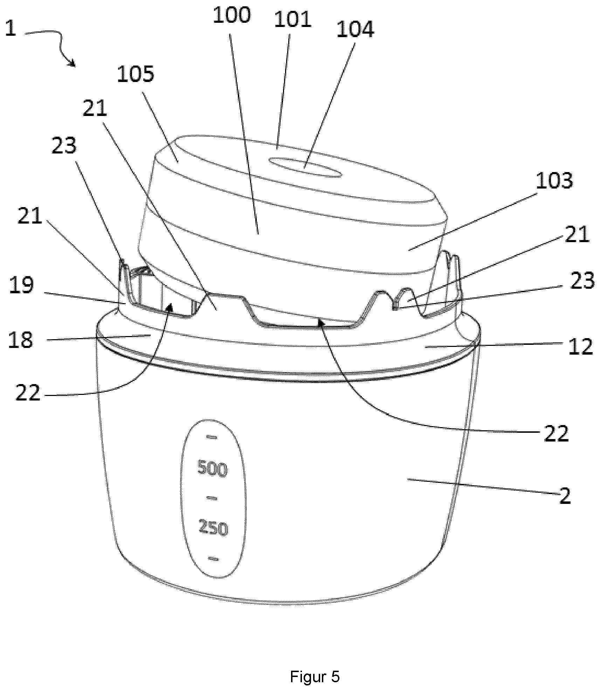

Figur 5 zeigt eine perspektivische Ansicht eines Teils der Baugruppe aus Figur 4. Im Vergleich zu Figur 4 ist hier die Abdeckung 6 entfernt worden, so dass die Tablette 100 im Innenraum 11 sichtbar ist. Die Tablette 100 ist im Wesentlichen zylindrisch gestaltet und weist einen Mantel 103 sowie eine Oberseite 105 und eine gegenüberliegende Unterseite 102 auf, die in der gezeigten Ansicht nicht zu erkennen ist. In den Übergangsbereichen von Mantel 103 zu Oberseite 101 bzw. Unterseite 102 ist jeweils eine Fase 105 vorgesehen, die insbesondere die Handhabung der Tablette 100 für den Anwender vereinfachen kann. Zudem weist die Tablette 100 eine zentrische Durchgangsbohrung 104 auf, die sich von der Oberseite 101 zur gegenüberliegenden Unterseite durch den Tablettenkörper erstreckt. Die Tablette 100 ist auf dem Mittelteil 12 angeordnet und ist insbesondere mit der Unterseite auf der Haltevorrichtung 14 angeordnet, welche Bestandteil des Mittelteils 12 ist, jedoch in Figur 5 durch die Tablette 100 verdeckt ist. Das Mittelteil 12 ist auf der Oberseite des Auffangbehälters 3 angeordnet und besteht aus dem ringförmigen Element 19, wobei der oberhalb beschriebene Versatz 18 vorgesehen ist, um eine Durchzugsmöglichkeit für die Raumluft bereitzustellen. Das ringförmige Element 19 weist ferner nach oben vorstehende Halteelemente 21 mit schlitzartigen Aufnahmenuten 23 auf, in die entsprechende Montagemittel der Abdeckung 6 eingreifen können. Zwischen benachbarten vorstehenden Halteelementen 21 sind Ausschnitte 22 vorgesehen, um besagte Durchzugsmöglichkeit zu ermöglichen.

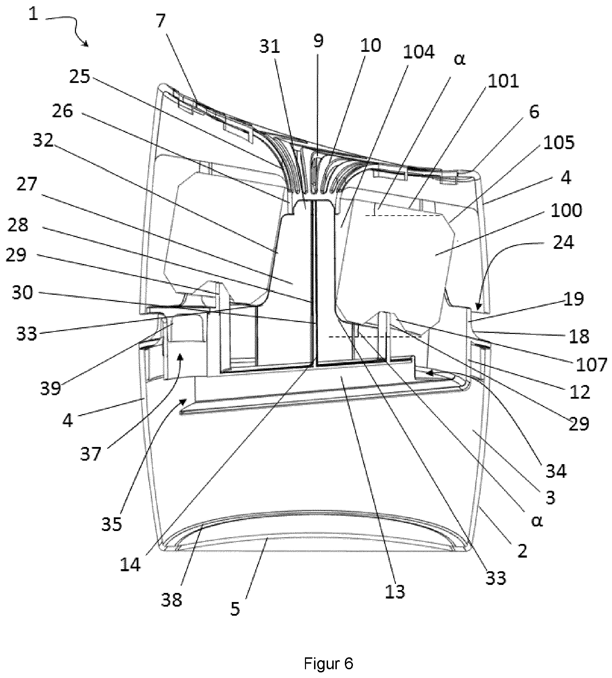

Figur 6 zeigt eine geschnittene Seitenansicht der Baugruppe aus Figur 4 durch die Schnittlinie A-A. In der gezeigten Ansicht ist die Abdeckung 6 wieder auf das Mittelteil 12 aufgesetzt worden, welches wiederum auf dem Auffangbehälter 3 montiert ist. Die Abdeckung 6 umschließt den Innenraum 11 mit der dort angeordneten Tablette 100. Die Seitenwand 8 umgibt den Innenraum 11 und somit auch die Tablette 100. Durch den Versatz 18 zwischen ringförmigen Element 12 des Mittelteils 12 und dem angrenzenden Bereich der Seitenwand 8 wird ein Zwischenraum 24 gebildet, durch den die Raumluft in den Innenraum 11 dringen kann, um mit der äußeren Oberfläche der Tablette 100 in Kontakt zu kommen. Die äußere Oberfläche dient dabei als Absorptionsfläche und wird durch die Unterseite 102, die Oberseite 101, den Mantel 103, die Fasen 105 sowie die Oberfläche der Durchgangsbohrung 104 gebildet, sofern sie nicht mit Bereichen des Luftentfeuchters 1 in Kontakt steht. Bei der Unterseite 102 ist noch hervorzuheben, dass hier eine ringförmige Nut 107 vorgesehen ist, die die Durchgangsbohrung 104 umgibt, um eine exakte Positionierung der Tablette 100 zu ermöglichen und um die Absorptionsoberfläche zu vergrößern. Die Tablette 100 kann die Feuchtigkeit von eindringender Raumluft absorbieren, so dass sich eine Salzlösung bildet, die nach unten, also in Richtung Auffangraum 3 des Auffangbehälters 2 abtropft. Um ein sicheres Auffangen der Salzlösung zu ermöglichen, weist das Mittelteil 12 einen Auslaufschutz auf, der einerseits ein Abfließen der Salzlösung von der im Innenraum 11 vorgesehenen Tablette 100 in den Auffangraum 3 ermöglicht. Auf der anderen Seite jedoch ein aus beispielsweise dem Umkippen des Luftentfeuchters 1 resultierendes Auslaufen der Salzlösung aus diesem Hohlraum verhindert. Das Mittelteil 12 weist hierfür eine trichterartige Sammelfläche auf, welche bereichsweise in den Auffangraum 3 ragt. Die Sammelfläche dient der Sammlung der Salzlösung, welche daraufhin durch eine obere Ablauföffnung 34 in einen Ablaufkanal 13 und schließlich durch eine untere Ablauföffnung 35 in den Auffangraum 3 fließt. Dabei sind die trichterartige Sammelfläche sowie der Ablaufkanal 13 derart konstruiert und ragen insbesondere derart in den Hohlraum hinein und sind derart von der Seitenwand 4 beabstandet, dass ein Zurücklaufen der Salzlösung selbst bei einem Umkippen des Luftentfeuchters 1 durch die untere Auslauföffnung 35 erschwert oder nahezu unmöglich wird. Der Auffangbehälter 2 kann über eine Ausgussöffnung 37 entleert werden, wobei die Ausgussöffnung 37 mittels eines Stopfens 39 verschließbar ist.

Die vorher in den Innenraum 11 eingedrungene und nun entfeuchtete Raumluft kann sodann über die Belüftungsschlitze 9 in der Deckseite 7 entweichen. Die Belüftungsschlitze 9 sind durch die Rippen 10 voneinander getrennt und sind rotorartig angeordnet und erstrecken sich jeweils vom Randbereich wellenartig in Richtung der Mitte der Deckseite 7 und folgen dabei der Form des Trichters 25 bereichsweise in Richtung des Innenraumes 11. Der Trichter 25 mündet in einer Muffe 26, die im Innenraum 11 mit einem Kupplungselement 31 eines Dornes 30 in Eingriff gebracht werden kann. Der Dorn 30 ist Teil des Mittelteils 12, bildet einen Teil der Haltevorrichtung 14 und erstreckt sich von der trichterartigen Sammelfläche, also vom unteren Bereich des Mittelteiles 12 in den Innenraum 11 in Richtung Deckseite 7. Dabei ist der Dorn 30 derart gestaltet, dass er mit der Durchgangsbohrung 104 der Tablette 100 in Eingriff gebracht werden kann. Die Tablette 100 wird somit bei abgenommener Abdeckung 6 mit ihrer Durchgangsbohrung 104 auf den Dorn 30 aufgesetzt, so dass dieser sich in der Durchgangsbohrung 104 befindet. Im Anschluss kann die Abdeckung aufgesetzt werden und die Muffe 26 mit dem Kupplungselement 31 in Eingriff gebracht werden, so dass die Tablette 100 dort gesichert wird. Der Dorn 30 weist eine erste Fläche 27 sowie eine zweite Fläche 28 auf, die sich kreuzartig schneiden, wobei sich die Schnittlinie von der Unterseite des Mittelteils 12 durch die Durchgangsbohrung 104 der eingelegten Tablette 100 bis zur Muffe 26 erstreckt. Durch den Einsatz der beiden Flächen 27, 28 kann ein Dorn 30 bereitgestellt werden, der nicht vollflächig an der Oberfläche der Durchgangsbohrung 104 anliegt, sondern lediglich allenfalls an den äußeren Stirnseiten der Flächen 27, 28 im Bereich der Durchgangsbohrung 104, um auch in diesem Bereich eine besonders große freie Oberfläche für die Absorption von Raumluft bereitzustellen. Die erste Fläche 27 läuft zudem in Richtung Deckseite 7 derart schräg zu, dass die erste Fläche 29 vom im unteren Bereich des Mittelteils 12 angeordneten Abschnitt bis hin zum gegenüberliegenden, der Deckseite 7 zugewandten Abschnitt schmaler wird. Die Stirnseite dieser schräg zulaufenden ersten Fläche 27 kommt als Abstützbereich 32 für die Oberfläche der Tablette 100 im Bereich der Durchgangsbohrung 104 zum Einsatz. Durch den beschriebenen schrägen Verlauf wird die Tablette 100 beim Aufsetzen selbiger mit der Durchgangsbohrung 104 auf den Dorn 30 derart schräg hinsichtlich des Substrates positioniert, dass die Oberseite 101 im bestimmungsgemäßen Gebrauch in einer Ebene liegt, die in einem Winkel α 10° schräg zum Substrat verläuft. Der Abstützbereich 32 kommt somit als Positionierungsmittel der Haltevorrichtung 14 für die Tablette 100 zum Einsatz, die derart gestaltet ist, dass die Unterseite 102 und somit auch die Oberseite 101 der auf der Haltevorrichtung 14 angeordneten Tablette 100 in einer Ebene liegt, welche schräg zum Substrat verläuft. Die Haltevorrichtung 14 weist ferner weitere Positionierungsmittel für die Tablette 100 auf. So weist die erste Fläche 27 an zwei Seiten des Dornes 30 angeordnete Auflagekanten 33 für die Tablette 100 auf. Diese sind derart gestaltet, dass die Tablette mit den Übergangsbereichen von Oberfläche der Durchgangsbohrung 104 zur Unterseite 102 und/oder mit Bereichen der Unterseite 102 an- bzw. aufliegt, um besagte Positionierung der Tablette 100 zu ermöglichen. Gleiches weist die zweite Fläche 28 auf, was jedoch in der vorliegenden Schnittansicht nicht zu erkennen ist. Zudem sind von dem Mittelteil 14 in Richtung Deckseite 7 vorstehende Auflagerippen 29 vorgesehen, deren Höhe derart auf die Form der einzulegende Tablette 100 und auf die anderen Positionierungsmittel abgestimmt ist, dass die Stirnseiten der Auflagerippen 29 mit der Unterseite 102 im Bereich der ringförmigen Nut 107 in Kontakt kommen und eine Positionierung ermöglichen. Für besagte schräge Anordnung der Tablette weisen die Auflagerippen 29 unterschiedliche Höhen auf, so dass den Stirnseiten, die mit der Unterseite 102 der Tablette 100 in Kontakt treten, in einer Ebene liegen, die, die in einem Winkel α 10° schräg zum Substrat verläuft. Die im Innenraum 11 angeordnete Haltevorrichtung 14 für die Anordnung der Tablette 100 insbesondere über deren Unterseite 102, ist vorliegend derart gestaltet und mit der Form der Tablette 100 derart abgestimmt, dass die Oberseite 101 der mit der Unterseite 102 auf der Haltevorrichtung 14 angeordneten Tablette 100 im bestimmungsgemäßen Gebrauch in einer Ebene liegt, die schräg zum Substrat verläuft. Auf diese Weise kann beispielsweise eine Bedeckung der Oberfläche durch einen Feuchtigkeitsfilm vermieden werden, was zu einer Effektivitätssteigerung führen kann. Denkbar sind auch Ausführungsformen, bei denen die notwendige Zeit für die Bildung der ersten Menge an Lösung im Auffangbehälter 2 verringern werden kann, was für den Anwender ein wichtiger Indikator für die Funktionsfähigkeit des Luftentfeuchters 1 sein kann.

### Bezugszeichenliste

| | | | |
|---|---|---|---|
| 1 | Luftentfeuchter | 25 | Trichter |
| 2 | Auffangbehälter | 26 | Muffe |
| 3 | Auffangraum | 27 | Erste Fläche |
| 4 | Seitenwand | 28 | Zweite Fläche |
| 5 | Boden | 29 | Auflagerippe |
| 6 | Abdeckung | 30 | Dorn |
| 7 | Deckseite | 31 | Kupplungselement |
| 8 | Seitenwand | 32 | Abstützbereich |
| 9 | Belüftungsschlitz | 33 | Auflagekante |
| 10 | Rippe | 34 | Obere Ablauföffnung |
| 11 | Innenraum | 35 | Untere Ablauföffnung |
| 12 | Mittelteil | 36 | Kappe |
| 13 | Kanal | 37 | Ausgussöffnung |
| 14 | Haltevorrichtung | 38 | Bodenkante |
| 15 | Auflagefläche | 39 | Stopfen |
| 16 | Winkel | 100 | Tablette |
| 17 | Skala | 101 | Oberseite |
| 18 | Versatz | 102 | Unterseite |
| 19 | Ringförmiges Element | 103 | Mantel |
| 20 | Verriegelungsmittel | 104 | Durchgangsbohrung |
| 21 | Vorstehendes Halteelement | 105 | Fase |
| 22 | Ausschnitt | 106 | Winkel |
| 23 | Aufnahmenut | 107 | Ringförmige Nut |
| 24 | Zwischenraum | | |

## Patentansprüche

1. Baugruppe bestehend aus einer Vorrichtung (1) zur Absorption von Feuchtigkeit aus Raumluft, sowie aus einer Tablette (100) beinhaltend ein hygroskopisches Luftentfeuchtungsmittel aufweisend eine Oberseite (101) und eine Unterseite (102), wobei die Vorrichtung (1) einen Auffangbehälter (2) zum Auffangen einer durch die Absorption entstehenden Lösung aufweist, wobei der Auffangbehälter (2) einen Boden (5) zum Aufstellen der Vorrichtung (1) auf ein Substrat umfasst; eine oberhalb des Auffangbehälters (2) angeordnete Abdeckung (6), die einen Innenraum (11) umgibt; sowie eine in dem Innenraum (11) angeordnete Haltevorrichtung (14) für die Anordnung der Tablette (100) über deren Unterseite (102), wobei die Gestaltung der Haltevorrichtung (14) und die Form der Tablette (100) derart aufeinander abgestimmt sind, dass die Oberseite (101) der mit der Unterseite (102) auf der Haltevorrichtung (14) angeordneten Tablette (100) im bestimmungsgemäßen Gebrauch in einer Ebene liegt, die schräg zum Substrat verläuft, **dadurch gekennzeichnet, dass** die Haltevorrichtung (14) ein Auflagemittel (15, 29) für eine Anordnung der Unterseite (102) der Tablette (100) aufweist, wobei das Auflagemittel (15, 29) in einer Ebene liegt, die schräg zum Substrat verläuft, wobei das Auflagemittel (15, 29) durch eine Mehrzahl an Auflagerippen (29) oder Auflagestege oder Auflagedornen zur Anordnung der Unterseite (102) gebildet wird, wobei sich besagte Auflagerippen (29) oder Auflagestege oder Auflagedornen in unterschiedliche Höhe in den Innenraum (11) erstrecken.

2. Baugruppe nach einem der vorhergehenden Ansprüche, **dadurch gekennzeichnet, dass** die Oberseite (101) in einer Ebene liegt, die in einem Winkel im Bereich von 2° bis 20°, vorzugsweise 5° bis 15°, besonders bevorzugt 10° zum Substrat verläuft.

3. Baugruppe nach einem der vorhergehenden Ansprüche, **dadurch gekennzeichnet, dass** die Haltevorrichtung (14) Positionierungsmittel (15, 29, 32, 33) für die Tablette (100) aufweist, die derart gestaltet sind, dass die Unterseite (102) der auf der Haltevorrichtung (14) angeordneten Tablette (100) in einer Ebene liegt, welche schräg zum Substrat verläuft.

4. Baugruppe nach einem der vorhergehenden Ansprüche, **dadurch gekennzeichnet, dass** das Auflagemittel (15, 29) durch eine Auflagefläche (15) zur Anordnung der Unterseite (102) gebildet wird.

5. Baugruppe nach einem der vorhergehenden Ansprüche, **dadurch gekennzeichnet, dass** die Haltevorrichtung (14) einen Dorn (30) umfasst und dass die Tablette (100) eine korrespondierende Öffnung (104) zur Aufnahme des Dorns (30) aufweist, wobei der Dorn Positionierungsmittel (32, 33) für die Tablette (100) aufweist, die derart gestaltet sind, dass die Unterseite (102) der auf der Haltevorrichtung (14) angeordneten Tablette (100) in einer Ebene liegt, welche schräg zum Substrat verläuft.

6. Baugruppe nach Anspruch 5, **dadurch gekennzeichnet, dass** der Dorn (30) in Form eines Zylinders oder eines Kegels oder eines Kegelstumpfes gestaltet ist.

7. Baugruppe nach einem der Ansprüche 5 oder 6, **dadurch gekennzeichnet, dass** der Dorn (30) zumindest eine Öffnung aufweist, um eine Belüftung der Tablette (100) im Bereich ihrer Öffnung (104) zu ermöglich und um die freie und zur Absorption von Feuchtigkeit zur Verfügung stehende Oberfläche der Tablette (100) weiter zu vergrößern.

8. Baugruppe nach Anspruch 7, **dadurch gekennzeichnet, dass** die zumindest eine Öffnung derart gestaltet ist, dass sie der durch die Absorption entstehenden Lösung eine bevorzugte Abtropf- und/oder Fließrichtung ermöglicht.

9. Baugruppe nach einem der Ansprüche 5 bis 8, **dadurch gekennzeichnet, dass** der Dorn (30) vorstehende Abstandselemente zur Bereitstellung einer Auflagemöglichkeit für die Tablette (100) im Bereich ihrer Öffnung (104) aufweist, um die Kontaktfläche von Tablette (100) und Dorn (30) zu minimieren.

10. Baugruppe nach Anspruch 9, **dadurch gekennzeichnet, dass** der Dorn (30) die vorstehenden Abstandselemente als längliche Rippen (27, 28), die sich in Erstreckungsrichtung des Dornes erstrecken können, oder als Noppen oder als Vorsprünge oder als Stifte gestaltet sind.

11. Baugruppe nach einem der vorhergehenden Ansprüche, **dadurch gekennzeichnet, dass** die Oberseite (101) der Tablette in einer Ebene liegt, die schräg zu einer Ebene verläuft, in der die Unterseite (102) liegt.

## Claims

1. An assembly consisting of a device (1) for absorbing moisture from room air and a tablet (100) containing a hygroscopic dehumidifying agent that has an upper side (101) and an underside (102), the device (1) comprising a collecting vessel (2) for collecting a solution resulting from the absorption, the collecting vessel (2) comprising a base (5) for placing the device (1) on a substrate; a cover (6), which is arranged above the collecting vessel (2) and surrounds an interior space (11); and a holding device (14) arranged in the interior (11) for arranging the tablet (100) by means of its underside (102), the design of the holding device (14) and the shape of the tablet (100) matching one another in such a way that, when used as intended, the upper side (101) of the tablet (100) arranged with the underside (102) on the holding device (14) lies in a plane which runs obliquely to the substrate,
**characterized in that** the holding device (14) comprises a support means (15, 29) for arranging the underside (102) of the tablet (100), the support means (15, 29) lying in a plane which runs obliquely to the substrate, the support means (15, 29) being formed by a plurality of support ribs (29) or support bars or support mandrels for arranging the underside (102), the support ribs (29) or support bars or support mandrels extending into the interior (11) at different heights.

2. The assembly according to one of the preceding claims,
**characterized in that** the upper side (101) lies in a plane which extends at an angle in the range of 2° to 20°, preferably 5° to 15°, particularly preferably 10°, to the substrate.

3. The assembly according to one of the preceding claims,
**characterized in that** the holding device (14) comprises positioning means (15, 29, 32, 33) for the tablet (100), which are designed such that the underside (102) of the tablet (100) arranged on the holding device (14) lies in a plane which runs obliquely to the substrate.

4. The assembly according to one of the preceding claims,
**characterized in that** the support means (15, 29) is formed by a support surface (15) for arranging the underside (102).

5. Assembly according to one of the preceding claims,
**characterized in that** the holding device (14) comprises a mandrel (30) and **in that** the tablet (100) has a corresponding opening (104) for receiving the mandrel (30), the mandrel comprising positioning means (32, 33) for the tablet (100), which are designed such that the underside (102) of the tablet (100) arranged on the holding device (14) lies in a plane which runs obliquely to the substrate.

6. The assembly according to claim 5, **characterized in that** the mandrel (30) is designed in the form of a cylinder or a cone or a truncated cone.

7. The assembly according to one of claims 5 or 6, **characterized in that** the mandrel (30) has at least one opening to allow ventilation of the tablet (100) in the region of its opening (104) and to further increase the free surface of the tablet (100) available for absorbing moisture.

8. The assembly according to claim 7, **characterized in that** the at least one opening is designed in such a way that it allows the solution resulting from the absorption to have a preferred dripping and/or flow direction.

9. The assembly according to one of claims 5 to 8, **characterized in that** the mandrel (30) has projecting spacer elements for providing a support option for the tablet (100) in the region of its opening (104) in order to minimize the contact area between the tablet (100) and the mandrel (30).

10. The assembly according to claim 9, **characterized in that** the mandrel (30) the projecting spacer elements are designed as elongated ribs (27, 28), which can extend in the extension direction of the mandrel, or as knobs or as projections or as pins.

11. The assembly according to one of the preceding claims,
**characterized in that** the upper side (101) of the tablet lies in a plane which runs obliquely to a plane in which the lower side (102) lies.

## Revendications

1. Ensemble constitué d'un dispositif (1) permettant d'absorber l'humidité de l'air ambiant, ainsi que d'une pastille (100) contenant un agent déshumidificateur hygroscopique présentant une face supérieure (101) et une face inférieure (102), dans lequel le dispositif (1) présente un récipient collecteur (2) permettant de collecter une solution résultant de l'absorption, dans lequel le récipient collecteur (2) comprend un fond (5) permettant de poser le dispositif (1) sur un substrat ; un élément de recouvrement (6) disposé au-dessus du récipient collecteur (2) et entourant un espace intérieur (11) ; ainsi qu'un dispositif de maintien (14) disposé dans l'espace intérieur (11) pour la disposition de la pastille (100) par l'intermédiaire de sa face inférieure (102), dans lequel la forme du dispositif de maintien (14) et la forme de la pastille (100) sont adaptées l'une à l'autre de telle sorte que la face supérieure (101) de la pastille (100) disposée avec la face inférieure (102) sur le dispositif de maintien (14) se situe, lors de l'utilisation conforme, dans un plan qui s'étend obliquement par rapport au substrat, **caractérisé en ce que** le dispositif de maintien (14) présente un moyen d'appui (15, 29) pour une disposition de la face inférieure (102) de la pastille (100), dans lequel le moyen d'appui (15, 29) se situe dans un plan qui s'étend obliquement par rapport au substrat, dans lequel le moyen d'appui (15, 29) est formé par une pluralité de nervures d'appui (29) ou de barrettes d'appui ou de mandrins d'appui pour la disposition de la face inférieure (102), dans lequel lesdites nervures d'appui (29) ou barrettes d'appui ou lesdits mandrins d'appui s'étendent à différentes hauteurs dans l'espace intérieur (11).

2. Ensemble selon l'une des revendications précédentes,
**caractérisé en ce que** la face supérieure (101) se situe dans un plan qui s'étend à un angle dans la plage allant de 2° à 20°, de préférence de 5° à 15°, de manière particulièrement préférée de 10° par rapport au substrat.

3. Ensemble selon l'une des revendications précédentes,
**caractérisé en ce que** le dispositif de maintien (14) présente des moyens de positionnement (15, 29, 32, 33) pour la pastille (100) qui sont conçus de telle sorte que la face inférieure (102) de la pastille (100) disposée sur le dispositif de maintien (14) se situe dans un plan qui s'étend obliquement par rapport au substrat.

4. Ensemble selon l'une des revendications précédentes,
**caractérisé en ce que** le moyen d'appui (15, 29) est formé par une surface d'appui (15) pour la disposition de la face inférieure (102).

5. Ensemble selon l'une des revendications précédentes,
**caractérisé en ce que** le dispositif de maintien (14) comprend un mandrin (30) **et en ce que** la pastille (100) présente une ouverture (104) correspondante permettant de recevoir le mandrin (30), dans lequel le mandrin présente des moyens de positionnement (32, 33) pour la pastille (100) qui sont conçus de telle sorte que la face inférieure (102) de la pastille (100) disposée sur le dispositif de maintien (14) se situe dans un plan qui s'étend obliquement par rapport au substrat.

6. Ensemble selon la revendication 5, **caractérisé en ce que** le mandrin (30) est conçu sous la forme d'un cylindre ou d'un cône ou d'un cône tronqué.

7. Ensemble selon l'une des revendications 5 ou 6, **caractérisé en ce que** le mandrin (30) présente au moins une ouverture pour permettre une aération de la pastille (100) dans la zone de son ouverture (104) et pour augmenter davantage la surface de la pastille (100) libre et disponible pour absorber l'humidité.

8. Ensemble selon la revendication 7, **caractérisé en ce que** l'au moins une ouverture est conçue de telle sorte qu'elle permet à la solution résultant de l'absorption de s'égoutter et/ou de s'écouler de manière préférentielle.

9. Ensemble selon l'une des revendications 5 à 8, **caractérisé en ce que** le mandrin (30) présente des éléments d'espacement en saillie permettant de fournir une possibilité d'appui pour la pastille (100) dans la zone de son ouverture (104) afin de minimiser la surface de contact de la pastille (100) et du mandrin (30).

10. Ensemble selon la revendication 9, **caractérisé en ce que** le mandrin (30) les éléments d'espacement en saillie sont conçus comme des nervures allongées (27, 28) qui peuvent s'étendre dans la direction d'extension du mandrin, ou comme des picots ou comme des saillies ou comme des tiges.

11. Ensemble selon l'une des revendications précédentes,
**caractérisé en ce que** la face supérieure (101) de la pastille se situe dans un plan qui s'étend obliquement par rapport à un plan dans lequel se situe la face inférieure (102).
